Europäisches Patentamt

European Patent Office

Office européen des brevets

(19)

(11) Veröffentlichungsnummer : **0 140 176**
**B1**

(12) **EUROPÄISCHE PATENTSCHRIFT**

(45) Veröffentlichungstag der Patentschrift :
15.04.87

(51) Int. Cl.⁴ : **B 60 K 13/04**

(21) Anmeldenummer : 84111633.8

(22) Anmeldetag : 28.09.84

(54) Aufhängevorrichtung für eine Abgasanlage eines Kraftfahrzeugs, insbesondere eines Personenkraftwagens.

(30) Priorität : 01.10.83 DE 3335789

(43) Veröffentlichungstag der Anmeldung :
08.05.85 Patentblatt 85/19

(45) Bekanntmachung des Hinweises auf die Patenterteilung : 15.04.87 Patentblatt 87/16

(84) Benannte Vertragsstaaten :
FR GB IT SE

(56) Entgegenhaltungen :
DE-A- 3 103 678
DE-B- 2 206 750
DE-B- 2 722 227
DE-C- 2 542 272
DE-U- 8 223 707
US-A- 4 113 286
US-A- 4 116 411

(73) Patentinhaber : BAYERISCHE MOTOREN WERKE
Aktiengesellschaft
Postfach 40 02 40 Petuelring 130 - AJ-36
D-8000 München 40 (DE)

(72) Erfinder : Lodders, Axel, Dipl.-Ing.
Friedenstrasse 77
D-8060 Dachau (DE)
Erfinder : Pautler, Norbert
Mannertstrasse 28a
D-8000 München 50 (DE)

(74) Vertreter : Dexheimer, Rolf
Bayerische Motoren Werke Aktiengesellschaft Postfach 40 02 40 Petuelring 130 - AJ-31
D-8000 München 40 (DE)

EP 0 140 176 B1

## Beschreibung

Aufhängevorrichtung für eine Abgasanlage eines Kraftfahrzeugs, insbesondere eines Personenkraftwagens.

Die Erfindung bezieht sich auf eine Aufhängevorrichtung der im Oberbegriff des Patentanspruchs 1 genannten Art, welche aus der DE-C-25 42 272 oder dem DE-U-82 23 707 hervorgeht.

Bei der bekannten Aufhängevorrichtung ist das vom Tragteil seitlich und nach unten wegragende Halteteil unmittelbar am Schalldämpfer angeschweißt, was verschiedene Nachteile hat. So wird dabei vor allem die an der Schalldämpferoberfläche vorgesehene Rostschutzschicht, insbesondere eine Plattierung aus Aluminium oder dgl., weggebrannt, so daß der Korrosionsschutz nach dem Schweißen zeitaufwendig erneuert werden muß. Da ferner bei Erzeugung der Schweißnähte natürlich auch die Rostschutzschicht (Plattierung) schmilzt, und dabei das aus dieser bestehende Schmelzgut in die Schweißnähte gelangt, kann hierdurch deren Qualität vermindert werden oder es können sogar Risse in den Schweißnähten entstehen. Ein Verschweißen von Halteteil und Schalldämpfer hat schließlich auch den Nachteil, daß die Lage des Tragrings in Fahrzeuglängsrichtung nicht verändert werden kann, wodurch bei ungünstiger Toleranzlage in der Längserstreckung der Abgasanlage der aus Gummi bestehende Tragring unter Umständen übermäßig ausgelängt wird.

Aufgabe der Erfindung ist es daher, eine Aufhängevorrichtung für eine Abgasanlage der eingangs genannten Gattung derart auszubilden, daß das abgasanlageseitige Tragteil am Schalldämpfer rüttelsicher, jedoch ohne Erzeugung einer Schweißverbindung, befestigt werden kann.

Zur Lösung der Aufgabe sind die im kennzeichnenden Teil des Patentanspruchs 1 dargelegten Gestaltungsmerkmale vorgesehen.

Neben der Vermeidung der Nachteile des Standes der Technik besteht ein mit der Erfindung erreichter Vorteil darin, daß die Klemmverbindung an jeder beliebigen Stelle der längs des Schalldämpfers verlaufenden Falznaht vorgesehen werden kann, so daß auch bei sehr ungünstiger Toleranzlage in der Längserstreckung der Abgasanlage der Tragring an jeweils exakt passender Stelle angeordnet werden kann. Auch kann die Abgasanlage an ihrem hinteren Endbereich über das Halteteil rasch und unkompliziert, ohne Erzeugung einer Schweißnaht und damit auch von Hilfskräften montiert und demontiert werden. Schießlich kann die vergleichsweise leichte Aufhängevorrichtung räumlich und funktionell an günstiger Stelle des Fahrzeugaufbaus vorgesehen werden.

Am einfachsten ist das Halteteil über einen an ihm ausgebildeten Anlageschenkel, an den über eine Spannschraube ein Klemmbügel gepreßt wird, mit der Falznaht zu verbinden (Patentansprüche 2 und 3), wobei diese durch vorgesehene, längs verlaufende Einbuchtungen an Halteteil und Klemmbügel hintergriffen werden kann.

Durch die am Halteteil und Klemmbügel vorgesehenen Auflagekröpfungen wird deren Biegesteifigkeit — neben einer exakten Auflage von Kopf und Mutter der Spannschraube — erhöht (Patentanspruch 4).

Ein Ausführungsbeispiel der Erfindung ist in der Zeichnung vorgesehen und wird im folgenden erläutert. Es zeigt :

Figur 1 eine Aufhängevorrichtung für einen Schalldämpfer eines Kraftfahrzeugs in Vorderansicht,

Figur 2 eine Seitenansicht zu Fig. 1.

An einem fahrzeugaufbaufesten Teil 1 ist ein U-förmig gestaltetes Tragteil 2 starr befestigt, das einen aus gummielastischem Werkstoff bestehenden Tragring 3 trägt. Dieser trägt seinerseits an seinem unteren, innenliegenden Krümmungsabschnitt einen ebenfalls U-förmig gestalteten, abgasanlageseitigen Tragring 4. An diesem ist an der dem fahrzeugaufbaufesten Teil 1 abgewandten Außenseite ein senkrechter Schenkel 15 eines nach unten wegragenden, winkelförmigen Halteteils 5 angeschweißt, das einen sich zum Tragring 3 hin erstreckenden Anlageschenkel 6 aufweist. Dieser hat ebenso wie ein an seiner Unterseite anliegender Klemmbügel 7 im Mittelbereich seiner Breiten- und Längserstreckung eine Durchgangsbohrung 8 bzw. 9, die von einer Spannschraube 10 mit Radialspiel durchsetzt sind. Über die Spannschraube 10 werden das Halteteil 5 (damit auch das abgasanlageseitige Tragteil 4) und der Klemmbügel 7 an eine radial von einem Schalldämpfer 12 wegragende und längs diesem verlaufende Falznaht 12' gepreßt.

Das Halteteil 5 und der Klemmbügel 7 haben ferner an ihren einander zugewandten Anlageseiten jeweils eine längsverlaufende Einbuchtung 5' und 7', in denen sich der freie, sehr dicke Endabschnitt 12'' der Falznaht 12' unter Bildung jeweils eines Luftspalts befindet ; hierdurch können die dem Schalldämpfer 12 zugewandten Ränder 5'' bzw. 7'' des Halteteils 5' und des Klemmbügels 7' den freien Endabschnitt 12'' der Falznaht 12' hintergreifen und werden an diese bei festgezogener Spannschraube 10 satt angepreßt. An dem vom Schalldämpfer 12 abgewandten, freien Endabschnitt des Halteteils 5 und des Klemmbügels 7 ist jeweils eine zum abgasanlageseitigen Tragteil 4 weisende Abwinkelung 13 bzw. 14 ausgebildet, wobei an letzterer nach festgezogener Spannschraube 10 die Abwinkelung 13 anliegt. Das Halteteil 5 und der Klemmbügel 7 sind jeweils im Umfangsbereich ihrer Durchgangsbohrungen 8 bzw. 9 mit einer von ihren Anlageseiten abstehenden Auflagekröpfung 5''' bzw. 7''' versehen. Auf diesen liegt der Kopf der Spannschraube 10 und deren Mutter 10' auf ; ferner wird durch die Auflagekröpfungen 5''' und 7''' die Biegesteifigkeit des Halteteils 5 und des Klembügels 7 erhöht. Zur Erhöhung der Biegesteifigkeit des Halteteils 5 in seiner Höhenerstreckung dient ferner auch eine dem Schalldämpfer 12 zugewandte Ausbuchtung 15.

Da an zwei waagrechten, diametral gegenüberliegenden Falznähten 12' des Schalldämpfers 12 jeweils ein Halteteil 5 und ein Klemmbügel 7 über eine Spannschraube 10 rüttelsicher festgeklemmt sind, wird der Schalldämpfer 12 und damit die gesamte Abgasanlage über die Teile 2, 3 und 4 vom fahrzeugaufbaufesten Teil 1 gehalten.

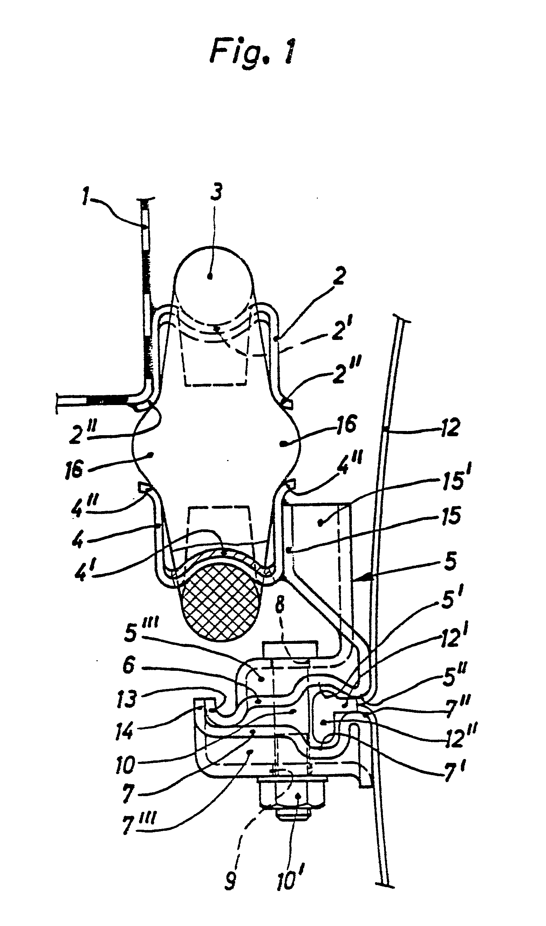

Wie in Fig. 1 ersichtlich, hat der Tragring 3 ein kreisförmiges Querschnittsprofil und ist in seinen freien Bereichen zwischen den Tragteilen 2 und 4 mit jeweils zwei abgerundeten, nockenförmigen Fortsätzen 16 versehen, welche in einer Ebene liegen. Bei Bewegungen des Schalldämpfers 12 wirken mit den nockenförmigen Fortsätzen 16 die an den freien Endabschnitten der Tragteile 2 und 4 vorgesehenen Anschlägen 2" und 4" zusammen.

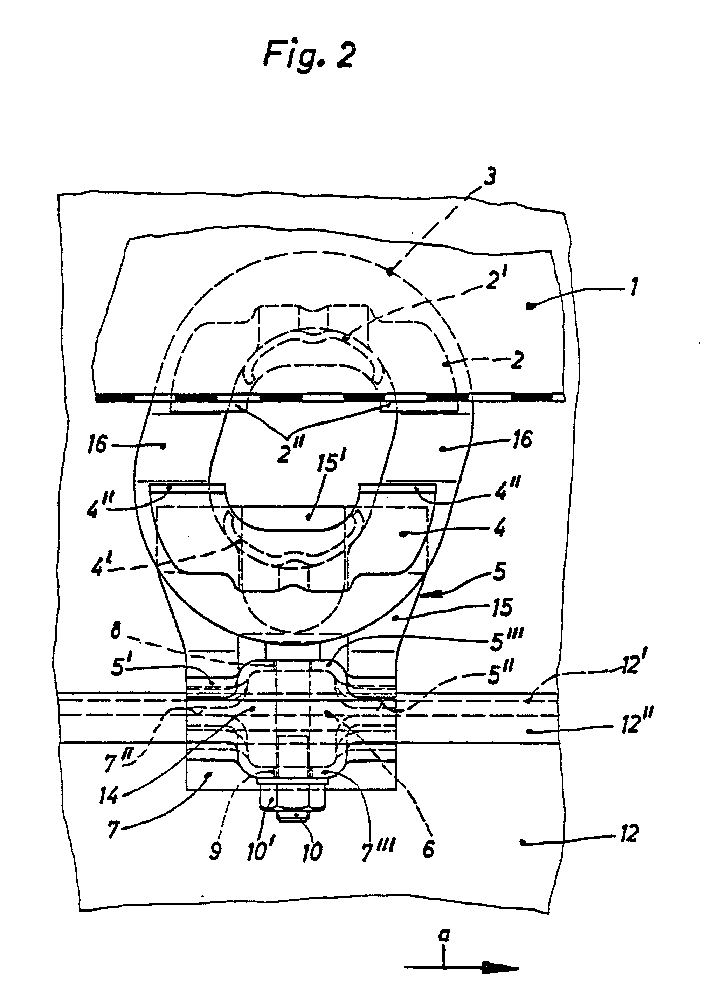

Fig. 2 zeigt die lageversetzte Stellung des abgasanlageseitigen Tragteils 4 gegenüber dem fahrzeugaufbauseitigen Tragteil 2 in kaltem Zustand der Abgasanlage. Durch diese Maßnahme wird erreicht, daß bei Wärmeausdehnung des Schalldämpfers 12 samt Abgasleitung in Pfeilrichtung a das abgasanlageseitige Tragteil 4 zunächst unterhalb dem fahrzeugaufbauseitigen Tragteil 2 zu liegen kommt und sich schließlich etwas über dieses hinaus bewegen kann. Hierdurch wird der Tragring 3 nur im Rahmen seiner Elastizität ausgelängt und unter Umständen seine Zerstörung durch übermäßige Auslängung — die beispielsweise bei gegenüberliegender Anordnung der Tragteile 2 und 4 entstehen könnte — verhindert.

### Patentansprüche

1. Aufhängevorrichtung für eine Abgasanlage eines Kraftfahrzeugs, insbesondere eines Personenkraftwagens, im wesentlichen bestehend aus jeweils einem am Fahrzeugaufbau (1) und an der Abgasanlage angebrachten Tragteil (2, 4) und einem die Tragteile (2, 4) verbindenden Tragring (3) aus gummielastischem Werkstoff, wobei der Schalldämpfer (12) der Abgasanlage einen längsverlaufenden, radial gerichteten Rand (12') aufweist, dadurch gekennzeichnet, daß das abgasanlageseitige Tragteil (4) an dem als Falznaht (12') ausgebildeten Rand des Schalldämpfers (12) festgeklemmt ist.

2. Aufhängevorrichtung nach Anspruch 1, wobei das abgasanlageseitige Tragteil ein nach unten wegragendes und mit dem Schalldämpfer in Verbindung stehendes Halteteil aufweist, dadurch gekennzeichnet, daß das Halteteil (5) einen sich zum Tragring (3) erstreckenden Anlageschenkel (6) aufweist, an dem sich ein Klemmbügel (7) abstützt, wobei dieser und das Halteteil die radial vom Schalldämpfer (12) wegragende Falznaht (12') hintergreifen und durch eine sie durchsetzende Spannschraube (10) an diese gepreßt werden.

3. Aufhängevorrichtung nach Anspruch 2, dadurch gekennzeichnet, daß das Halteteil (5) und der Klemmbügel (7) im Mittelbereich ihrer Breiten-und Längserstreckung jeweils eine die Spannschraube (10) aufnehmende Durchgangsbohrung (8, 9) aufweisen sowie an ihren einander zugewandten Anlageseiten jeweils mit einer längsverlaufenden Einbuchtung (5', 7') zur Aufnahme des freien Endabschnitts (12") der Falznaht (12') versehen sind, gegen welche die außenliegenden Ränder (5', 7') des Halteteils und Klemmbügels gepreßt werden, während dieser an seinem freien Ende eine zum abgasanlageseitigen Tragteil (4) weisenden Abwinkelung (14) hat, an der eine am freien Ende des Halteteils vorgesehene Abwinkelung (13) anliegt.

4. Aufhängevorrichtung nach Anspruch 3, dadurch gekennzeichnet, daß das Halteteil (5) und der Klemmbügel (7) jeweils eine im Umfangsbereich der Durchgangsbohrungen (8, 9) liegende und von ihren Anlageseiten abstehende Auflagekröpfung (5''', 7''') aufweisen.

### Claims

1. A suspension device for an exhaust system of a motor vehicle, especially a passenger car, formed essentially of carrier parts (2, 4) fitted one on the vehicle structure (1) and one on the exhaust system, and of a carrier ring (3) of rubber-elastic material connecting the carrier parts (2, 4) together, the silencer (12) of the exhaust system being provided with a longitudinally-extending, radially-directed edge (12'), characterised in that the carrier part (4) on the exhaust system is clamped fast to the edge of the silencer (12), which edge is formed as a folded seam (12').

2. A suspension device according to Claim 1, wherein the carrier part on the exhaust system comprises a downwardly-protruding retaining part connected with the silencer, characterised in that the retaining part (5) comprises an abutment leg (6) extending to the carrier ring (3), on which leg a clamp strap (7) is supported, and this strap and the retaining part grasp each other behind the folded seam (12') which protrudes radially away from the silencer (12) and are pressed against this seam by a clamping screw (10) passing through them.

3. A suspension device according to Claim 2, characterised in that the retaining part (5) and the clamp strap (7) each have, in the middle region of their extent in width and length, a through-bore (8, 9) which receives the clamping screw (10) and are each provided on their abutment sides facing one another with a longitudinally-extending recess (5', 7') for the reception of the free end section (12") of the folded seam (12') against which the external edges (5", 7") of the retaining part and clamp strap are pressed, the latter having, at its free end, an angled portion (14) pointing towards the exhaust system carrier part (4), against which portion there abuts an angled portion (13) provided on the free end of the retaining part.

4. A suspension device according to Claim 3, characterised in that the retaining part (5) and the clamp strap (7) each comprise a cranked support piece (5‴, 7‴) lying in the circumferential region of the through-bores (8, 9) and protruding from their abutment sides.

**Revendications**

1. Dispositif de suspension pour un système d'échappement d'un véhicule automobile, notamment d'une voiture automobile, dispositif essentiellement constitué de pièces porteuses (2, 4), l'une rapportée sur la carrosserie du véhicule et l'autre sur le système d'échappement, et d'un anneau porteur (3), en un matériau présentant l'élasticité du caoutchouc, reliant entre elles ces pièces porteuses (2, 4), tandis que le silencieux (12) du système d'échappement comporte un bord (12'), s'étendant longitudinalement et orienté radialement, dispositif caractérisé en ce que la pièce (4) porteuse côté système d'échappement est bloquée par serrage sur le bord (12'), revêtant la forme d'un assemblage par sertissage, du silencieux (12).

2. Dispositif de suspension selon la revendication 1, dans lequel la pièce porteuse côté système d'échappement comporte une partie de maintien s'étendant vers le bas et se trouvant en liaison avec le silencieux, dispositif caractérisé en ce que cette partie de maintien (5) comporte une branche d'appui (6) s'étendant vers l'anneau porteur (3) et sur laquelle prend appui un étrier de serrage (7), cet étrier, ainsi que la partie de maintien, venant en prise sur l'assemblage par sertissage (12') faisant saillie radialement à partir du silencieux (12) et étant serrés sur cet assemblage par une vis de serrage (10) qui les traverse.

3. Dispositif de suspension selon la revendication 2, caractérisé en ce que la partie de maintien (5) et l'étrier de serrage (7) comportent respectivement, dans la zone médiane de leur extension en largeur et en longueur, un perçage traversant (8, 9) recevant la vis de serrage (10) et sont respectivement pourvus, sur leurs faces d'appui en regard l'une de l'autre, d'une anfractuosité (5', 7') s'étendant longitudinalement, destinée à recevoir la partie d'extrémité libre de l'assemblage par sertissage (12'), contre laquelle sont serrés les bords externes de la partie de maintien et de l'étrier de serrage, tandis que celui-ci comporte à son extrémité libre un pliage (14) orienté vers la pièce porteuse (4) côté système d'échappement, pliage sur lequel s'applique un pliage (13) prévu à l'extrémité libre de la partie de maintien.

4. Dispositif de suspension selon la revendication 3, caractérisé en ce que la partie de maintien (5) et l'étrier de serrage (7) comportent respectivement, autour des perçages traversants (8, 9), un bossage d'appui (5‴, 7‴) faisant saillie à partir de leurs faces d'appui.

## Fig. 1

Fig. 2